# EUROPÄISCHE PATENTSCHRIFT

(11) **EP 0 865 569 B1**
(45) Veröffentlichungstag und Bekanntmachung des Hinweises auf die Patenterteilung: **07.08.2002**
(21) Anmeldenummer: 96943926.4
(22) Anmeldetag: 12.12.1996
(51) Int. Cl.: F02C 3/16, F02K 7/00

(54) **MITTELS ROTIERENDER RAKETE ANGETRIEBENE ANTRIEBSMASCHINE**
PROPULSION ENGINE DRIVEN BY ROTARY ROCKETS
MOTEUR DE PROPULSION ENTRAINE PAR DES MOTEURS-FUSEES ROTATIFS

(30) Priorität: 13.12.1995 DE 19546474
(43) Veröffentlichungstag der Anmeldung: 23.09.1998
(73) Patentinhaber: Klein, Hans-Ulrich, 97688 Bad Kissingen (DE)
(72) Erfinder: Klein, Hans-Ulrich, 97688 Bad Kissingen (DE)
(74) Vertreter: Sparing - Röhl - Henseler Patentanwälte
(86) Internationale Anmeldenummer: EP9605550
(87) Internationale Veröffentlichungsnummer: WO9721915

(56) Entgegenhaltungen:
- CH-A- 267 495
- DE-U- 29 501 500
- US-A- 2 551 111
- US-A- 3 089 307
- US-A- 5 282 356

## Beschreibung

Die Erfindung betrifft eine Brennkraftmaschine für den Betrieb mit einem flüssigen Oxidationsmittel.

Aus der nicht vorveröffentlichten deutschen Patentanmeldung 195 01 192.9 ist eine Brennkraftmaschine bekannt, bei der ein Rotor mit Rotorflügeln vorgesehen ist, in denen jeweils eine raketenartig wirkende Brennkammer untergebracht ist, denen jeweils getrennt und dosiert Kraftstoff und tiefgekühlter Flüssigsauerstoff zugeführt werden, die in der Brennkammer verbrannt werden, wobei die dabei stattfindende Volumenexpansion resultierend aus der Verbrennung und der Sauerstoffverdampfung zum Antrieb einer Abtriebswelle verwendet wird. Dadurch, daß die Abgasabführung einen gesonderten Abführkanal mit Zutrittsöffnungen benötigt, ist die Brennkraftmaschine relativ kompliziert.

Aus CH-A-267 495 ist eine Wärmekraftmaschine entsprechend dem Oberbegriff des Anspruchs 1 bekannt, bei der ein Rotor vorgesehen ist, der am Umfang mehrere Brennräume jeweils mit einem Brenner trägt, denen über eine nicht erkennbare Weise insbesondere fester Brennstoff wie Kohlenstaub zugeführt werden soll, während die Zufuhr der Verbrennungsluft durch eine hohle Welle und von dort durch einen feststehenden Düsenkranz zu Eintrittskanälen der Brennräume erfolgt. Die Brennräume münden in einem zum Umfang des Rotors hin offenen Ausschnitt und sind so über zwei umgebende Abgaskanäle mit der Abgasabführung verbunden.

Aufgabe der Erfindung ist es, eine Brennkraftmaschine der eingangs genannten Art zu schaffen, die konstruktionsmäßig vereinfacht ist.

Diese Aufgabe wird entsprechend dem kennzeichnenden Teil des Anspruchs 1 gelöst.

Dadurch, daß Ausschnitte des Rotors, in die düsenartige öffnungen der Brennkammern münden, offen mit dem Abgassammelkanal in Verbindung stehen, ergibt sich eine vereinfachte Konstruktion, die zugleich zu einer Verbesserung des Wirkungsgrads führt. Ebenfalls kann die Steuerung vereinfacht werden, da Zündfestpunkte fehlen. Der Rotor läßt sich als scheibenförmiges Schwungrad mit turbinenartigem und vibrationsarmem Lauf ausbilden.

Die Verwendung eines flüssigen Oxidationsmittels in Form von insbesondere flüssigem, tiefgekühltem Sauerstoff oder mit Sauerstoff stark angereicherter, verflüssigter Luft als Oxidationsmittel bei der Verbrennung des Kraftstoffs führt dazu, daß einerseits eine explosionsartige Vergasung des Oxidationsmittels, die im Falle von flüssigem Sauerstoff mit einer Volumenexpansion auf das 854-fache stattfindet, und andererseits eine schon bei niedrigem Druck selbstzündende, explosionsartige Verbrennung des Kraftstoffs genutzt wird, so daß sich ein erheblich verbesserter Wirkungs- und Nutzungsgrad für die Rückstoßvorgänge ergibt. Da kein oder wenig Stickstoff mit dem Oxidationsmittel in den Brennraum eingeführt wird, entstehen bei der Verbrennung auch keine oder wenige Stickoxide. Praktisch entstehen durch die Verbrennung im wesentlichen nur Kohlendioxid und Wasser, so daß das Verfahren sehr umweltfreundlich ist. Als Kraftstoff kommt Benzin, Dieselöl oder auch biologisch als Dieselölersatz erzeugter Kraftstoff, gegebenenfalls auch gasförmiger Brennstoff infrage, d.h. es handelt sich um einen "Allesbrenner". Auch Kohlenstaub läßt sich in einer derartigen Brennkraftmaschine verbrennen, wobei dabei entstehende Asche durch die Abgase ausgefegt wird.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

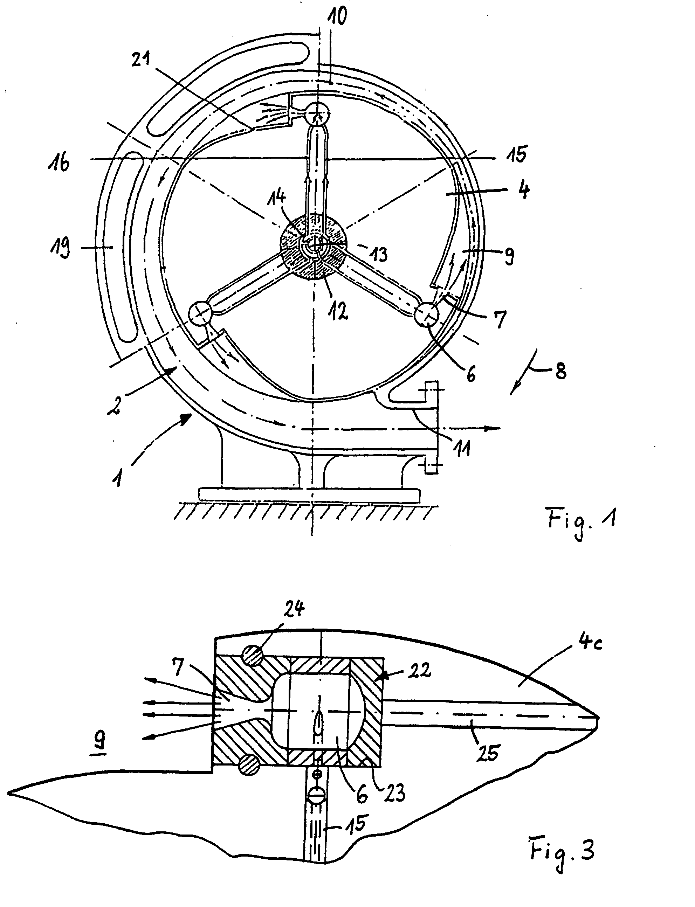

Fig. 1 zeigt eine Ausführungsform eines Rotationsraketenmotors schematisiert im Axialschnitt.

Fig. 2 zeigt detaillierter den Motor von Fig. 1 im Radialschnitt.

Fig. 3 zeigt einen detailierteren Ausschnitt von Fig. 1.

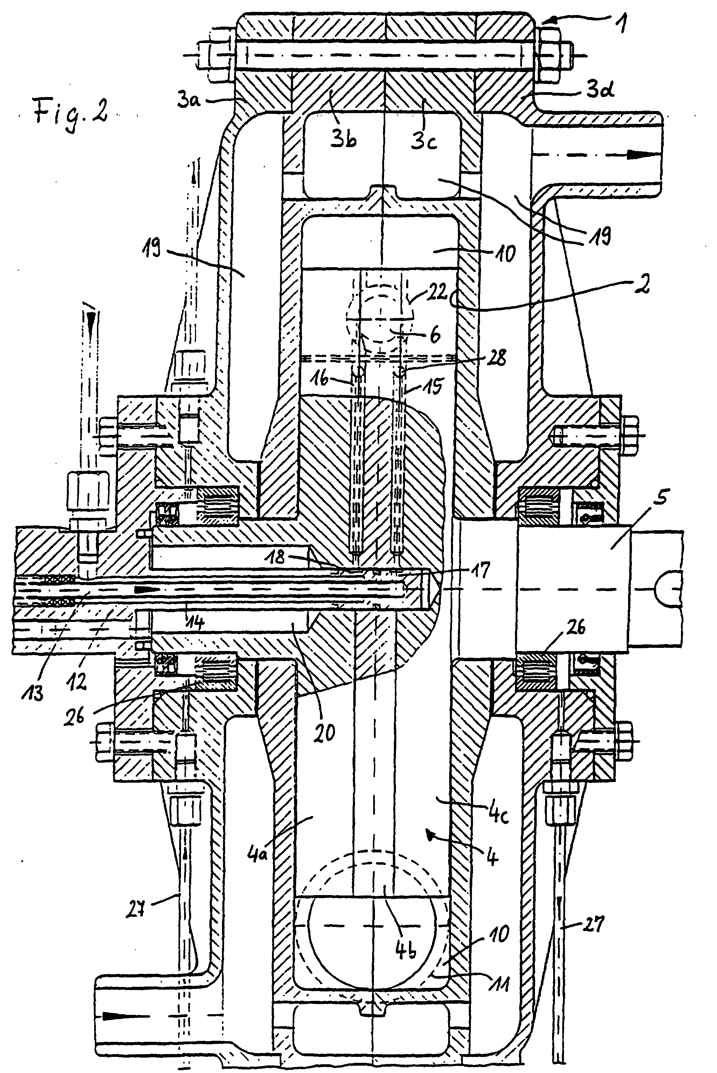

Der dargestellte Rotationsraketenmotor umfaßt ein Rotorgehäuse 1 mit einer Kammer 2, das vorzugsweise aus mehreren miteinander verspannten Scheiben 3a, 3b, 3c, 3d (vgl. Fig. 2) gebildet ist.

In der Kammer 2 ist ein vorzugsweise scheibenförmiger Rotor 4 angeordnet, der eine Abtriebswelle 5 trägt, die in dem Rotorgehäuse 1 gelagert und an einer Seite nach außen geführt ist. Der Rotor 4 besitzt mehrere, im dargestellten Ausführungsbeispiel drei, in gleichmäßigem Abstand zueinander angeordnete Brennkammern 6 benachbart zu seinem Außenumfang. Jede Brennkammer 6 ist über eine insbesondere lavaldüsenartige öffnung 7 mit einem in Drehrichtung (Pfeil 8) nachfolgenden, zum Umfang des Rotors 4 hin offenen Ausschnitt 9 des scheibenförmigen Rotors 4 verbunden. Jeder Ausschnitt 9 hat zweckmäßigerweise in Seitenansicht des Rotors 4 im wesentlichen die Form eines rechtwinkligen Dreiecks, dessen längere Kathete vorzugsweise kontinuierlich in den Außenumfang des Rotors 4 übergeht.

Der Rotor 4 ist an seinem Außenumfang von einem Abgassammeikanal 10 von der Breite des Rotors 4 (plus geringes Spiel an beiden Seiten) umgeben, der zum Rotor 4 hin offen ist und sich von einer engsten Stelle, an der nur Spiel zwischen dem Rotorgehäuse 1 und dem Rotor 4 besteht, bis zu einem Stutzen 11 einer Abgasabführleitung in seinem Querschnitt kontinuierlich bis zum Querschnitt des Stutzens 11 vergrößert. Hierdurch stehen die Ausschnitte 9 in unmittelbarer Verbindung mit dem Abgassammelkanal 10.

Die zentrale Zufuhr von Flüssigsauerstoff und Kraftstoff erfolgt über einen mit dem Rotorgehäuse 1 fest verbundenen Zuteiler 12, der koaxial zur Drehachse des Rotors 4 angeordnet ist und bis etwa zu dessen Mitte reicht. Der Zuteiler 12 besitzt einen mittleren Kanal 13 für Flüssigsauerstoff und einen diesen ringförmig umgebenden Kanal 14 für Kraftstoff. Im Rotor 4 ist jeweils eine Bohrung 15 bzw. 16 für Flüssigsauerstoff bzw. Kraftstoff zu den jeweiligen Brennkammern 6 geführt, die zum Zuteiler 12 hin offen sind. Letzterer ist am Außenumfang mit entsprechenden Zuteilöffnungen 17, 18 versehen, so daß im Betrieb der jeweiligen Brennkammer 6 in einem vorbestimmten Zeitraum eine vorbestimmte Menge an Flüssigsauerstoff und Kraftstoff zugeführt wird.

Das Rotorgehäuse 1 ist zweckmäßigerweise mit Kühlwasserräumen 19 versehen. Um den Zuteiler 12 herum kann in der Abtriebswelle 5 eine Kühlkammer 20, die kühlmitteldurchflossen sein oder auch ein Peltierelement aufnehmen kann, vorgesehen sein.

Gegebenenfalls kann der Rotor 4 aus Keramikmaterial bestehen oder mit einer Keramikbeschichtung 21 versehen sein. Auch die Innenwand der Kammer 2 des Rotorgehäuses 1 kann mit keramischem Material beschichtet sein.

Der Rotationsraketenmotor kann derart betrieben werden, daß der Kraftstoff und der Flüssigsauerstoff allen Brennkammern 6 gleichzeitig zugeführt und nach Selbstzündung verbrannt wird. Der Betrieb kann aber auch so erfolgen, daß den Brennkammern 6 entgegen der Drehrichtung 10 aufeinanderfolgend jeweils der zur Verbrennung notwendige Kraftstoff und Flüssigsauerstoff zugeführt wird. Die Dosierung, etwa die Anordnung und Länge der Zuteilöffnungen 17, 18 in Umfangsrichtung, ist entsprechend der gewünschten Betriebsweise einzurichten.

Wenn der Kraftstoff in (wenigstens) einer Brennkammer 6 zündet, tritt eine entsprechende Expansion zusätzlich zu der Verdampfungsexpansion des flüssigen Sauerstoffs auf. Die entstehenden Abgase treten durch die düsenartige öffnung 7 in den dieser nachfolgenden Ausschnitt 9 und damit auch in den Abgassammelkanal 10 unter Beschleunigung des Rotors 4 in Drehrichtung aus. Durch die hohe Austrittsgeschwindigkeit der Abgase aus den öffnungen 7 werden diese in die Abgasabführleitung gefördert. Aufgrunddessen benötigt man keine Dichtung zwischen Rotor 4 und Rotorgehäuse 1, vielmehr kann zwischen diesen ein relativ großes Spiel vorhanden sein, ohne daß dies den Betrieb beeinträchtigt.

Wie aus Fig. 2 und 3 ersichtlich, kann der Rotor 4 aus drei miteinander verspannten Scheiben 4a, 4b und 4c bestehen, wobei die beiden äußeren Scheiben 4a und 4c einstückig mit entsprechenden Abschnitten der Abtriebswelle 5 verbunden sind. Die Bohrungen 15 und 16 befinden sich im Bereich der aneinandergrenzenden Stirnseiten der Scheiben 4a, 4b und 4c und die Brennkammer 6 wird durch einen (mehrteiligen) Einsatz 22 gebildet, der von einer Sacklochbohrung 23 aufgenommen und mittels eines Sicherungselements 24 im Rotor 4 gesichert wird. Eine in der Sacklochbohrung 23 mündende Bohrung 25 geringen Durchmessers dient zum Ausstoßen des Einsatzes 22 im Reparaturfall.

Die Abtriebswelle 5 wird über Lager 26 im Rotorgehäuse 1 gelagert, die über Schmierölleitungen 27 geschmiert sind.

Kugeln 28 in den Brennstoff- und Sauerstoffleitungen 15, 16 fungieren als Rückschlagorgane während der Brennvorgänge.

## Patentansprüche

1. Brennkraftmaschine mit einem eine zylindrische Kammer (2) aufweisenden Rotorgehäuse (1), einem mit einer Abtriebswelle (5) verbundenen, in der Kammer (2) umlaufenden Rotor (4), der benachbart zu seinem Umfang wenigstens eine Brennkammer (6) trägt, die über eine düsenartige Öffnung (7) in einem in Drehrichtung des Rotors (4) nachfolgenden, zum Umfang des Rotors (4) hin offenen Ausschnitt (9) des Rotors (4) mündet, und mit einer Abgasabführleitung, wobei der Rotor (4) von einem sich im wesentlichen über seinen Umfang erstreckenden, zum Rotor (4) hin offenen, mit der Abgasabführieitung verbundenen Abgassammelkanal (10) umgeben ist, **dadurch gekennzeichnet, daß** die wenigstens eine Brennkammer (6) über radiale, im Rotor (4) befindliche, in der Brennkammer (6) mündende, mit einer Kraftstoffzuführung (14) und einer Oxidationsmittelzuführung (13) verbundene Leitungen (15, 16) kraftstoff- und oxidationsmittelversorgt ist.

2. Brennkraftmaschine nach Anspruch 1, **dadurch gekennzeichnet, daß** der Rotor (4) scheibenförmig ist.

3. Brennkraftmaschine nach Anspruch 1 oder 2, **dadurch gekennzeichnet, daß** sich der Abgassammelkanal (10) von im wesentlichen Null kontinuierlich bis zum Erreichen des Querschnitts der Abgasabführleitung erweitert.

4. Brennkraftmaschine nach einem der Ansprüche 1 bis 3, **dadurch gekennzeichnet, daß** das Rotorgehäuse (1) aus mehreren, miteinander verspannten Scheiben (3a, 3b, 3c, 3d) zusammengesetzt ist.

5. Brennkraftmaschine nach einem der Ansprüche 1 bis 4, **dadurch gekennzeichnet, daß** der Rotor (4) aus mehreren miteinander verspannten Scheiben (4a, 4b, 4c) zusammengesetzt ist.

6. Brennkraftmaschine nach einem der Ansprüche 1 bis 5, **dadurch gekennzeichnet, daß** die Brennkammer (6) von einem Brennkammereinsatz (22) gebildet wird.

7. Brennkraftmaschine nach einem der Ansprüche 1 bis 7, **dadurch gekennzeichnet, daß** die düsenartigen Öffnungen (7) lavaldüsenartige Öffnungen sind.

8. Brennkraftmaschine nach einem der Ansprüche 1 bis 7, **dadurch gekennzeichnet, daß** der Rotor (4) einen axialen Zuteiler (12) für die Kraftstoff- und Oxidationsmittelzuführung zu den Brennkammern (6) aufweist.

9. Brennkraftmaschine nach einem der Ansprüche 1 bis 8, **dadurch gekennzeichnet, daß** Kraftstoff- und Oxidationsmitteldosierung derart ausgebildet ist, daß sämtliche Brennkammern (6) gleichzeitig versorgt werden.

10. Brennkraftmaschine nach einem der Ansprüche 1 bis 8, **dadurch gekennzeichnet, daß** Kraftstoff- und Oxidationsmitteldosierung derart ausgebildet ist, daß die Brennkammern (6) gegenläufig zur Drehrichtung (8) des Rotors (4) nacheinander versorgt werden.

## Claims

1. Internal combustion engine having a rotor housing (1) with a cylindrical chamber (2); having a rotor (4) which is connected to a take-off shaft (5) and rotates in the chamber (2) and which, adjacent to its periphery, carries at least one combustion chamber (6) which opens, by way of a nozzle-like opening (7), into a recess (9) of the rotor (4), which recess (9) is open towards the periphery of the rotor (4) and is downstream in the direction of rotation of the rotor (4); and having an exhaust gas removal line, the rotor (4) being surrounded by an exhaust gas collection channel (10) that extends substantially over the periphery of the rotor (4) and is open towards the rotor (4) and is connected to the exhaust gas removal line, **characterised in that** the at least one combustion chamber (6) is supplied with fuel and oxidising agent by means of radial conduits (15, 16) located in the rotor (4), which radial conduits (15, 16) open into the combustion chamber (6) and are connected to a fuel supply line (14) and to an oxidising agent supply line (13).

2. Internal combustion engine according to claim 1, **characterised in that** the rotor (4) is disc-like.

3. Internal combustion engine according to claim 1 or 2, **characterised in that** the exhaust gas collection channel (10) widens out continuously from substantially nothing until it reaches the cross-section of the exhaust gas removal line.

4. Internal combustion engine according to any one of claims 1 to 3, **characterised in that** the rotor housing (1) is composed of a plurality of discs (3a, 3b, 3c, 3d) that are clamped against each other.

5. Internal combustion engine according to any one of claims 1 to 4, **characterised in that** the rotor (4) is composed of a plurality of discs (4a, 4b, 4c) that are clamped against each other.

6. Internal combustion engine according to any one of claims 1 to 5, **characterised in that** the combustion chamber (6) is formed by a combustion chamber insert (22).

7. Internal combustion engine according to any one of claims 1 to 7, **characterised in that** the nozzle-like openings (7) are Laval-nozzle-like openings.

8. Internal combustion engine according to any one of claims 1 to 7, **characterised in that** the rotor (4) has an axial metering device (12) for supplying fuel and oxidising agent to the combustion chambers (6).

9. Internal combustion engine according to any one of claims 1 to 8, **characterised in that** fuel and oxidising agent are metered in such a manner that all the combustion chambers (6) are supplied simultaneously.

10. Internal combustion engine according to any one of claims 1 to 8, **characterised in that** fuel and oxidising agent are metered in such a manner that the combustion chambers (6) are supplied one after the other in a direction opposite to the direction of rotation (8) of the rotor (4).

## Revendications

1. Moteur à combustion interne comprenant un carter de rotor (1) qui présente une chambre cylindrique (2), un rotor (4) relié à l'arbre de sortie (5), qui tourne dans la chambre (2) et qui porte, dans le voisinage de sa périphérie au moins une chambre de combustion (6) qui débouche, par l'intermédiaire d'une ouverture (7) en forme de buse, dans un segment (9) du rotor (4) qui y fait suite dans le sens de la rotation du rotor (4), et qui est ouverte sur la périphérie du rotor (4), et une conduite d'évacuation des gaz d'échappement, le rotor (4) étant entouré d'un conduit (10) collecteur des gaz d'échappement, qui s'étend sensiblement sur la circonférence du rotor, et ouvert en direction du rotor (4) et est relié à la conduite d'évacuation des gaz d'échappement, **caractérisé en ce qu'**au moins une chambre de combustion (6) est alimentée en carburant et oxydant par l'intermédiaire de conduites radiales (15, 16) situées dans le rotor (4), qui débouchent dans la chambre de combustion (6), et qui sont reliées à une amenée de carburant (14) et une amenée d'oxydant (13).

2. Moteur à combustion interne selon la revendication 1, **caractérisé en ce que** le rotor (4) est en forme de disque.

3. Moteur à combustion interne selon la revendication 1 ou 2, **caractérisé en ce que** le conduit collecteur des gaz d'échappement (10) s'élargit continuellement d'une valeur sensiblement nulle jusqu'à atteindre la section de la conduite d'évacuation des gaz d'échappement.

4. Moteur à combustion interne selon l'une des revendications 1 à 3, **caractérisé en ce que** le carter (1) du rotor est composé de plusieurs disques (3a, 3b, 3c, 3d) serrés les uns contre les autres.

5. Moteur à combustion interne selon l'une des revendications 1 à 4, **caractérisé en ce que** le rotor (4) est composé de plusieurs disques (4a, 4b, 4c) serrés les uns contre les autres.

6. Moteur à combustion interne selon l'une des revendications 1 à 5, **caractérisé en ce que** la chambre de combustion (6) est formée par une garniture intérieure de chambre de combustion (22).

7. Moteur à combustion interne selon l'une des revendications 1 à 6, **caractérisé en ce que** les ouvertures (7) en forme de tuyères sont des ouvertures du genre des tuyères de Laval.

8. Moteur à combustion interne selon l'une des revendications 1 à 7, **caractérisé en ce que** le rotor (4) présente un alimentateur (12) pour l'amenée du carburant et de l'oxydant aux chambres de combustion (6).

9. Moteur à combustion interne selon l'une des revendications 1 à 8, **caractérisé en ce que** le dosage du carburant et de l'oxydant est réalisé de manière que toutes les chambres de combustion (6) soient alimentées simultanément.

10. Moteur à combustion interne selon l'une des revendications 1 à 8, **caractérisé en ce que** le dosage du carburant et de l'agent oxydant est réalisé de manière que les chambres de combustion (6) soient alimentées l'une après l'autre en sens inverse du sens de rotation (8) du rotor (4).
